# EUROPÄISCHE PATENTSCHRIFT

(11) **EP 2 366 512 B1**
(45) Veröffentlichungstag und Bekanntmachung des Hinweises auf die Patenterteilung: **17.04.2013**
(21) Anmeldenummer: 11000932.1
(22) Anmeldetag: 05.02.2011
(51) Int. Cl.: B23D 47/02, B23D 59/00, B23Q 11/00, B27B 5/065

(54) **Plattenaufteilanlage**
Board separation assembly
Dispositif de découpe de plaques

(30) Priorität: 17.03.2010 DE 202010004119 U
(43) Veröffentlichungstag der Anmeldung: 21.09.2011
(73) Patentinhaber: HOLZMA Plattenaufteiltechnik GmbH, 75365 Calw-Holzbronn (DE)
(72) Erfinder: Martynenko, Sergey, 71083 Herrenberg (DE); Gröning, Peter, 75392 Deckenpfronn (DE); Schmidt, Tibor, 72218 Wildberg (DE); Seid, Torsten, 75365 Calw/Holzbronn (DE)
(74) Vertreter: Knapp, Thomas

(56) Entgegenhaltungen:
- EP-A1- 1 674 197
- US-A1- 2005 069 392

## Beschreibung

Die Erfindung betrifft eine Plattenaufteilanlage nach dem Oberbegriff des Anspruchs 1. Eine solche Plattenaufteilanlage ist aus der EP 1 674 197 A1 bekannt. Bei dieser handelt es sich um eine Plattenaufteilsäge, welche einen Auflagetisch aufweist, in dessen Oberseite eine Vielzahl von sich in Vorschubrichtung erstreckenden Nuten vorhanden sind. In jeder dieser Nuten ist ein unterer Klemmfinger einer Spannzange der Vorschubeinrichtung aufgenommen. Dies gestattet es, dass das Werkstück oder der Werkstückstapel flächig auf dem Auflagetisch aufliegt und dennoch an seinem hinteren Rand von den Spannzangen sicher gegriffen werden kann.

Aufgabe der vorliegenden Erfindung ist es, eine Plattenaufteilanlage der eingangs genannten Art so weiterzubilden, dass sie noch präziser und ökonomischer arbeitet.

Diese Aufgabe wird durch eine Plattenaufteilanlage mit den Merkmalen des Anspruchs 1 gelöst. Vorteilhafte Weiterbildungen sind in Unteransprüchen angegeben. Für die vorliegende Erfindung wichtige Merkmale sind darüber hinaus in der nachfolgenden Beschreibung und in der Zeichnung genannt beziehungsweise gezeichnet. Dabei sei an dieser Stelle darauf hingewiesen, dass diese Merkmale sowohl in Alleinstellung als auch in ganz unterschiedlichen Kombinationen für die Erfindung wichtig sein können, ohne dass hierauf jeweils explizit hingewiesen wird.

Durch die erfindungsgemäß vorgesehene seitliche Ausnehmung in der Nut ("Spannzangenut") an ihrem zum Sägespalt weisenden Ende, welche nach oben hin geschlossen und nach unten offen ist, wird der von der Säge erzeugte Spänestrahl so abgelenkt, dass eine Späneanhäufung in der Nut und auf der Oberseite des Auflagetisches vermieden wird. Die Werkstücke liegen daher besonders gut auf dem Auflagetisch auf, was die Präzision beim Sägen sowie durch die verbesserte Späneerfassung die gesamte Prozesssicherheit erhöht. Die Wirtschaftlichkeit wird verbessert, weil aufwändige Reinigungsarbeiten während nicht mehr erforderlich sind.

Erreicht wird dies vor allem dadurch, dass vermieden wird, dass der Spänestrahl gegen eine geschlossene seitliche Wand der Nut prallt, dort abgelenkt wird und an einem nicht vom Werkstück abgedeckten Bereich der Nut aus dieser austritt, wodurch Späne auf die Oberseite des Auflagetisches gelangen sowie in der Nut liegen bleiben. Durch die Erfindung wird also die Prallfläche, an der Späne abgelenkt werden können, minimiert. Voraussetzung hierfür ist, dass die seitliche Aufnehmung wenigstens in etwa in Verlängerung der Spänefluglinie liegt. Die früher vorhandenen Prallflächen werden also durch die seitlichen Ausnehmungen ersetzt. Durch die seitliche Ausnehmung wird die Strömungslinie an der seitlichen Begrenzungswand der Spannzangennut unterbrochen. Dies ist besonders relevant dann, wenn ein sehr schmaler Plattenstreifen abgesägt werden soll, also ein Streifen, der in einer Richtung orthogonal zur Sägelinie nur eine sehr geringe Erstreckung aufweist.

Besonders vorteilhaft ist es, wenn die Nut auf beiden Seiten des Sägespalts vorhanden ist und auf beiden Seiten des Sägespalts jeweils die seitliche Ausnehmung aufweist. Hierdurch wird besonders vollständig ein Gelangen von Sägespänen auf die Oberseite des Auflagetisches vermieden.

Ferner wird vorgeschlagen, dass die Nut, bezogen auf ihre Längsachse, auf beiden Seiten jeweils die seitliche Ausnehmung aufweist. Dies gestattet die Erzielung der erfindungsgemäßen Vorteile unabhängig von der Drehrichtung der Säge. Auch sind Plattenaufteilanlagen bekannt, welche neben der Säge einen sogenannten "Vorritzer" aufweisen, mit dem vor dem eigentlichen Sägeschnitt eine Nut in die Unterseite des Werkstücks eingebracht wird. Ein solcher Vorritzer arbeitet üblicherweise mit zur Säge entgegengesetzter Drehrichtung. Durch die Anordnung von seitlichen Ausnehmungen auf beiden Seiten der Nut wird sowohl der Spänestrahl des Vorritzers als auch der Spänestrahl der Säge von der Oberseite des Auflagetisches ferngehalten.

Je nach Einsatzzweck können verschiedene geometrische Ausgestaltungen der seitlichen Ausnehmung vorteilhaft sein. Beispielsweise kann eine vom Sägespalt abgewandte Stirnseite der seitlichen Ausnehmung abgerundet oder schräg sein. Hierdurch wird vermieden, dass sich ein Eck der seitlichen Ausnehmung mit Sägespänen zusetzt.

Besonders effektiv wirkt die seitliche Ausnehmung, wenn sie über ihre gesamte Länge und Breite nach unten offen ist.

Ferner wird vorgeschlagen, dass die seitliche Ausnehmung durch einen Absaugspalt wenigstens zeitweise mit einer an einem Sägewagen der Säge vorhandenen Absaugeinrichtung verbunden ist. Damit werden die Späne über die seitlichen Ausnehmungen immer dann, wenn der Sägewagen bei einer Schnittbewegung gerade in ihrem Bereich ist, aktiv abgesaugt. Der Effekt ist daher besonders stark. Möglich ist auch, dass eine seitliche Begrenzungswand der seitlichen Ausnehmung um eine parallel zu einer Längsachse der Nut verlaufende Achse gekippt ist. Die besagte seitliche Begrenzungswand wirkt also als "schräge Ablenkfläche", welche den Spänestrahl nach unten ablenkt. Auch dies hilft, den Eintrag von Spänen auf die Oberseite des Auflagetisches zu reduzieren.

Herstellungstechnisch besonders einfach ist es dabei, wenn die gekippte seitliche Begrenzungswand sich von der Nut bis zur Unterseite der seitlichen Ausnehmung erstreckt.

Um auch direkt am beziehungsweise im Sägespalt den Spänestrahl vollständig nach unten zu lenken, ist es vorteilhaft, wenn eine seitliche Begrenzungswand der seitlichen Ausnehmung zum Sägespalt hin eine Schräge aufweist, also eine Fläche, die um eine vertikale und/oder horizontale Achse gekippt ist.

Vorgeschlagen wird ferner, dass eine seitliche Begrenzungswand der seitlichen Ausnehmung im Übergang zu einer oberen Begrenzungswand eine Rundung aufweist. Hierdurch wird eine Ansammlung von Sägestaub in diesem Bereich verringert oder ganz vermieden.

Außerdem kann eine Basis der Nut an ihrem zum Sägespalt weisenden Ende eine Fase aufweisen. Hierdurch wird ebenfalls die Strömung verbessert und ein Ansammeln von Sägestaub verringert.

Nachfolgend werden Beispiele der Erfindung unter Bezugnahme auf die beiliegende Zeichnung erläutert. In der Zeichnung zeigen:
- Figur 1: eine schematische Seitenansicht einer Plattenaufteilanlage;
- Figur 2: eine perspektivische Darstellung einer Tischauflageplatte der Plattenaufteilanlage von Figur 1 im Bereich einer Sägelinie mit Sägespalt, Spannzangennut und seitlichen Ausnehmungen;
- Figur 3: eine perspektivische Darstellung eines Bereichs der Tischauflageplatte von Figur 2 mit darunter liegenden Maschinenträger;
- Figur 4: eine perspektivische Darstellung eines gegenüber liegenden Teils der Tischauflageplatte von Figur 2 mit darunter liegenden Maschinenträger;
- Figur 5: einen Schnitt durch einen Bereich der Plattenaufteilanlage von Figur 1 längs der Linie V-V von Figur 1;
- Figur 6: eine perspektivische Darstellung eines Bereichs einer Tischauflageplatte mit Spannzangennut und anders geformten seitlichen Ausnehmungen;
- Figur 7: eine Schnittdarstellung einer Tischauflageplatte mit Spannzangennut und nochmals anders geformten seitlichen Ausnehmungen;
- Figur 8: eine Darstellung ähnlich Figur 6 mit nochmals anders geformten seitlichen Ausnehmungen;
- Figur 9: eine Darstellung ähnlich zu Figur 7 mit nochmals anders geformten seitlichen Ausnehmungen; und
- Figur 10: eine Darstellung ähnlich zu Figur 8 mit nochmals anders geformten seitlichen Ausnehmungen.

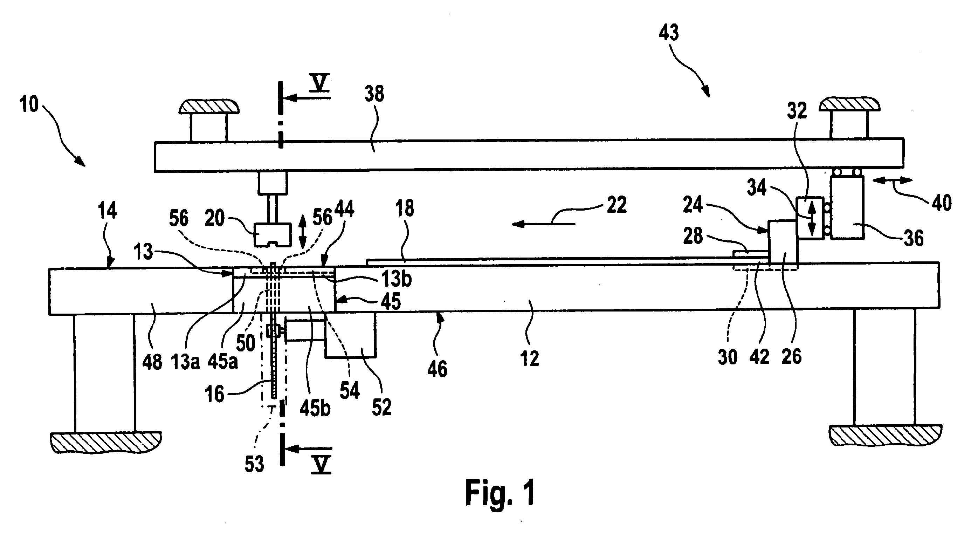

In Figur 1 trägt eine Plattenaufteilanlage insgesamt das Bezugszeichen 10. Sie umfasst einen horizontalen Auflagetisch 12 und eine Säge 16, mit der ein auf dem Auflagetisch 12 liegendes Werkstück 18 in einzelne Streifen aufgeteilt werden kann, sowie einen in Figur 1 nicht sichtbaren Vorritzer. Um während des Sägens das Werkstück 18 sicher in Position zu halten, ist oberhalb der Säge 16 ein vertikal verschieblicher Druckbalken 20 vorgesehen.

Um von der Säge 16 in einzelne Streifen aufgeteilt werden zu können, ist das Werkstück 18 in Vorschubrichtung (Pfeil 22) bewegbar. Hierzu sind mehrere senkrecht zur Plattenebene verteilt angeordnete Spannzangen vorgesehen, von denen in Figur 1 nur eine mit dem Bezugszeichen 24 dargestellt ist. Die Spannzange 24 umfasst einen Haltekörper 26, an dem zwei Klemmfinger 28 und 30 beweglich angebracht sind. Die Spannzange 24 ist an einem Schlitten 32 befestigt, welcher in vertikaler Richtung (Doppelpfeil 34) gegenüber einem senkrecht zur Blattebene verlaufenden Programmschieber 36 verschieblich gelagert ist. Der Programmschieber 36 kann wiederum längs zweier horizontaler Schienen, von denen in Figur 1 nur eine mit dem Bezugszeichen 38 sichtbar ist, längs zur Vorschubrichtung 22 bewegt werden (Doppelpfeil 40).

Im Betrieb wird ein in Vorschubrichtung 22 gesehen hinterer Rand des Werkstücks 18 zwischen den beiden Klemmfingern 28 und 30 der Spannzange 24 verklemmt. Durch eine Bewegung des Programmschiebers 36 in Vorschubrichtung 22 wird das Werkstück der Säge 16 zugeführt. Nach der vollständigen Aufteilung des Werkstücks 18 wird der hintere Rand 42 des Werkstücks 18 von den Spannzangen 24 wieder freigegeben. Der Schlitten 32 mit der Spannzange 24 wird vertikal nach oben bewegt, und der Programmschieber 36 wird entgegen der Vorschubrichtung 22 zurückgefahren. Die Komponenten 24, 32, 36 und 38 sind somit Teil einer Vorschubvorrichtung 43.

Der Auflagetisch 12 weist, in Vorschubrichtung 22 gesehen, verschiedene Bereiche auf. Im Bereich der Säge 16 wird der Auflagetisch 12 durch einen Maschinentisch 44 gebildet. In Figur 1 rechts von diesem wird der Auflagetisch 12 durch einen Zuführtisch 46, in Figur 1 links vom Maschinentisch 44 durch einen Entnahmetisch 48 gebildet. Im Maschinentisch 44 ist ein Sägespalt 50 vorhanden, durch den die Säge 16 (und der Vorritzer) nach oben über die Oberseite des Auflagetisches 12 herausbewegt werden kann, um einen Sägeschnitt durchzuführen. Hierzu ist die Säge 16 an einem Sägewagen 52 befestigt, der senkrecht zur Blattebene von Figur 1 bewegbar ist. Entsprechend erstreckt sich der Sägespalt 50 im Maschinentisch 44 ebenfalls in einer Richtung senkrecht zur Blattebene längs einer nicht gezeigten Sägelinie. Der Zuführtisch 46 wird durch nicht näher gezeigte und parallel zur Zuführrichtung 22 verlaufende Rollenschienen gebildet, der Entnahmetisch kann beispielsweise als Luftkissentisch ausgebildet sein.

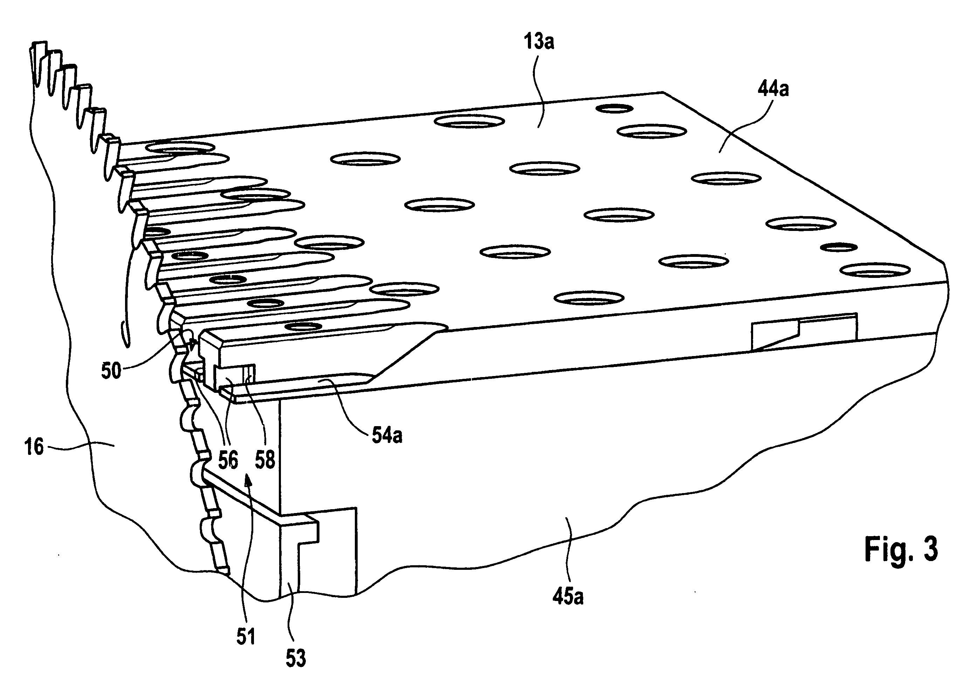

In vertikaler Richtung wird der Maschinentisch 44 im Wesentlichen durch einen Maschinenträger 45 und eine auf diesem aufgebrachte Tischauflageplatte 13 gebildet. Durch den Sägespalt 50 wird der Maschinentisch 44 in horizontaler Richtung in einen entnahmeseitigen Bereich und einen zuführseitigen Bereich unterteilt. Die entnahmeseitigen Bereiche von Maschinentisch 45 und Auflageplatte 13 sind durch den Index a, die zuführseitigen Bereiche durch den Index b gekennzeichnet. Die beiden Abschnitte 13a und 13b der Tischauflageplatte 13 ragen zum Sägespalt 50 hin etwas über den Maschinenträger 45 hinweg. Dier hierdurch zwischen den beiden Abschnitten 45a und 45b des Maschinenträgers 45 gebildete Freiraum gehört zu einem Absaugspalt 51 für eine weiter unten stärker im Detail beschriebenen Späneabsaugung mittels einer am Sägewagen 52 vorhandenen Absaugeinrichtung 53 (siehe bspw. Figur 3). In der Oberseite der Tischauflageplatte 13 sind mehrere in Längsrichtung der Plattenaufteilanlage 10, also parallel zur Vorschubrichtung 22 verlaufende Nuten vorhanden, von denen in Figur 1 nur eine mit dem Bezugszeichen 54 bezeichnet ist. Die Nuten 54 erstrecken sich dabei über die gesamte Länge des zuführseitigen Bereichs 13b der Tischauflageplatte 13 bis zum Sägespalt 50. Auf der anderen Seite des Sägespaltes 50 erstrecken sich die Nuten 54 nur noch über ein kurzes Stück, sie enden also im entnahmeseitigen Bereich 13a der Tischauflageplatte 13.

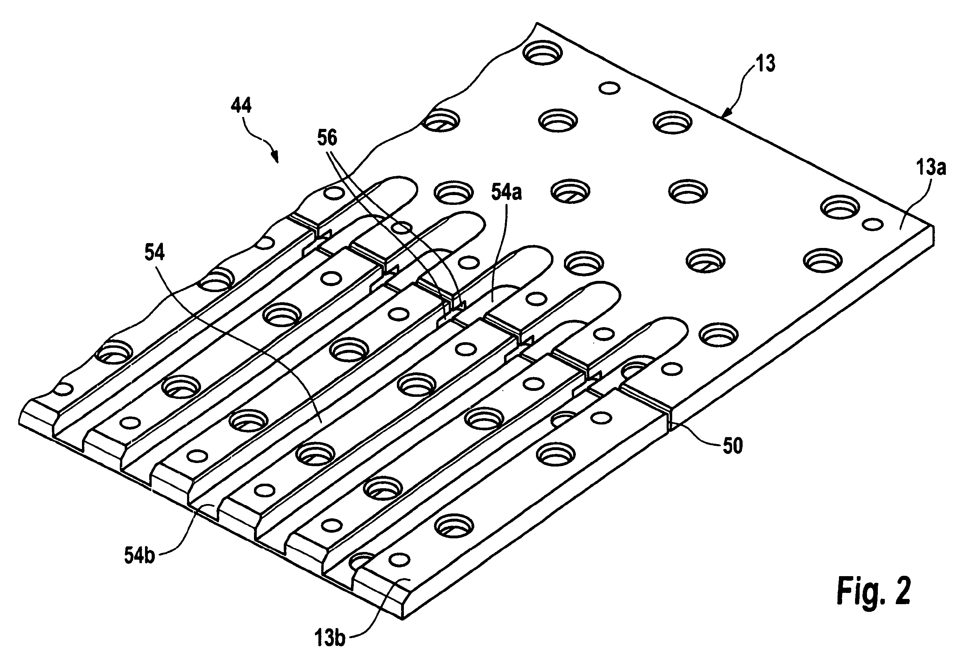

Dies ist besonders gut aus Figur 2 ersichtlich, wo die Tischauflageplatte 13 perspektivisch dargestellt ist. Aus Gründen der Übersichtlichkeit ist in Figur 2 nur eine Nut 54 mit einem Bezugszeichen versehen. Die Nut im zuführseitigen Bereich 13b der Tischauflageplatte 13 ist mit dem Bezugszeichen 54b, die Nut im entnahmeseitigen Bereich 13a der Tischauflageplatte 13 mit 54a bezeichnet. Die Nuten 54 dienen zur Aufnahme jeweils eines unteren Klemmfingers 30 einer Spannzange 24. Bei einer Bewegung der Vorschubvorrichtung 43 befinden sich also die unteren Klemmfinger 30 der Spannzangen 24 in einer entsprechenden Nut 54, wodurch es ermöglicht wird, dass das Werkstück 18 vollständig auf der Oberseite der Tischauflageplatte 13 aufliegt und dennoch sicher zwischen den beiden Klemmfingern 28 und 30 einer Spannzange 24 gehalten ist. Dadurch, dass auch in der entnahmeseitigen Tischauflageplatte 13a Nuten 54a vorhanden sind, können die Spannzangen 24 sogar über den Sägespalt 50 hinweg bis zur entnahmeseitigen Tischauflageplatte 13a bewegt werden.

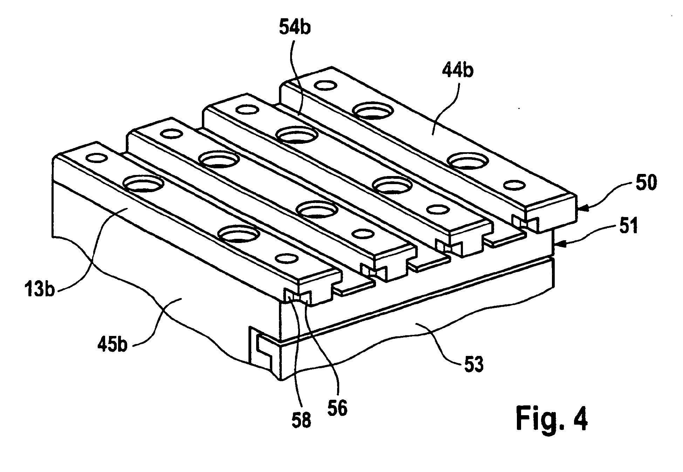

Jede Nut 54 weist an ihrem zum Sägespalt 50 weisenden Ende eine seitliche Aufnehmung 56 auf. Bei der hier gezeigten Plattenaufteilanlage 10 trifft dies für die Nut 54 auf beiden Seiten des Sägespalts 50 zu. Sowohl die "Teilnut" 54a im entnahmeseitigen Bereich 13a der Tischauflageplatte 13 (Figur 3) als auch die "Teilnut" 54b im zuführseitigen Bereich 13b der Tischauflageplatte 13 (Figur 4) sind also dergestalt ausgebildet. Darüber hinaus weist jede Nut 54 auch, bezogen auf ihre Längsachse (ohne Bezugszeichen) auf beiden Seiten jeweils eine seitliche Ausnehmung 56 auf. Somit verfügt eine Nut 54 im Bereich des Sägespalts 50 über insgesamt vier seitliche Ausnehmungen 56. Dies ist, wie gesagt, nur bei der hier gezeigten Ausführungsform der Fall, bei anderen Ausführungsformen könnten beispielsweise auch nur im entnahmeseitigen Bereich 13a der Tischauflageplatte 13, also in der Teilnut 54a, zwei seitliche Ausnehmungen 56a vorhanden sein, oder es könnte auch nur eine einzige seitliche Ausnehmung 56 vorgesehen sein.

Die seitlichen Ausnehmungen 56 sind lediglich im unteren Bereich der Tischauflageplatte 13 eingebracht, sie erstrecken sich also nicht bis zur Oberseite der Tischauflageplatte 13. Somit sind sie nach oben geschlossen. Nach unten dagegen erstrecken sich die seitlichen Ausnehmungen 56 bis zur Unterseite der Tischauflageplatte 13, sie sind somit nach unten über ihre gesamte Länge und Breite vollständig offen und sind dadurch, dass die Tischauflageplatte 13 zum Sägespalt 50 hin über den Maschinenträger 45 hinausragt, mit dem zwischen den beiden Bereichen 45a und 45b des Maschinenträgers 45 gebildeten Absaugspalt 51 verbunden. Eine vom Sägespalt 50 abgewandte Stirnseite 58 der seitlichen Ausnehmungen 56 ist abgerundet ausgeführt (vergleiche Figur 3).

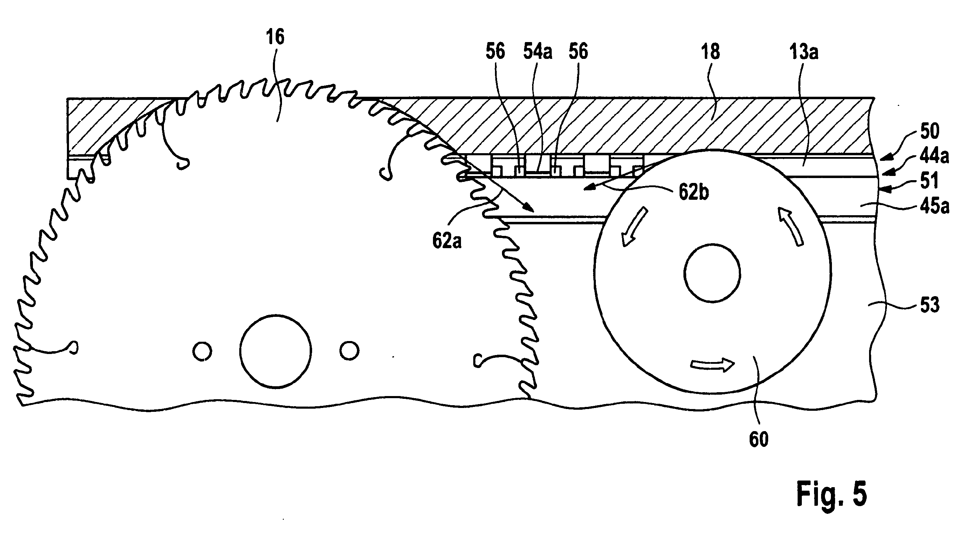

Die seitlichen Ausnehmungen 56 haben folgende Funktion (siehe Figur 5): Beim Sägen von Werkstücken 18 mittels der Säge 16 und/oder beim Vorritzen des untersten Werkstücks 18 durch einen Vorritzer 60 wird jeweils ein Spänestrahl erzeugt (Pfeile 62a und 62b in Figur 5). Die Spänestrahlen 62 verlaufen im Wesentlichen zunächst in der Ebene des Sägespalts 50, also in etwa in der Blattebene von Figur 5. Durch die seitlichen Ausnehmungen 56 wird im Bereich des Sägespalts 50 in den seitlichen Wänden der Nuten 54 jeweils ein Durchlasskanal geschaffen, durch den nicht exakt in der Ebene des Sägespalts 50 liegende Späne der Spänestrahlen 62 nach unten in den Bereich unterhalb der Tischauflageplatte 13 beziehungsweise unterhalb des Auflagetisches 12 in den Absaugspalt 51 gelangen können. Sie können dort von der beispielsweise am Sägewagen 52 vorhandenen und in Figur 1 nur strichpunktiert angedeuteten Absaugeinrichtung 53 abgesaugt werden. Auf diese Weise wird verhindert oder zumindest deutlich vermindert, dass Späne an den seitlichen Begrenzungswänden der Nuten 54 abprallen und sich entweder in den Nuten 54 ansammeln und diese verstopfen oder gleich durch die Nuten 54 in einer Richtung senkrecht zur Blattebene von Figur 5 transportiert werden und so auf die Oberseite des Auflagetisches 12 gelangen.

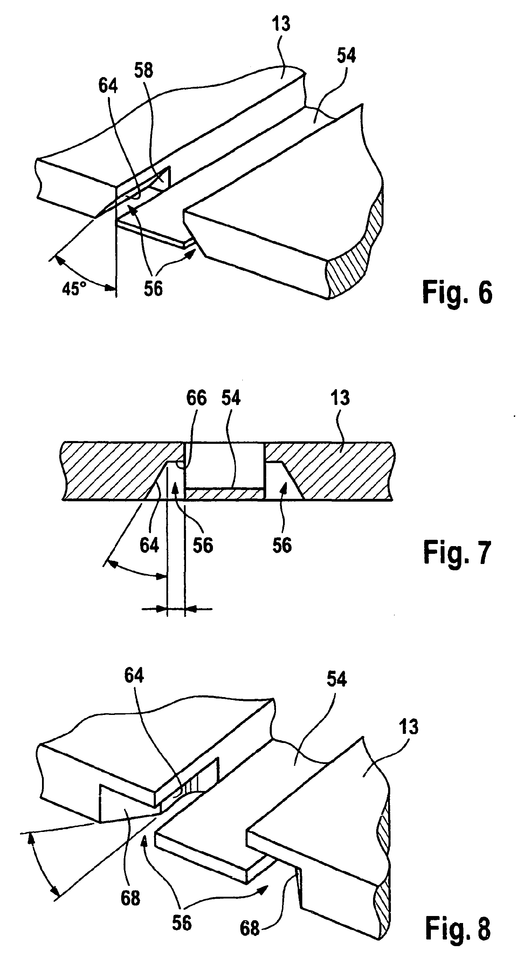

In den Figuren 6 bis 8 sind alternative geometrische Ausgestaltungen der seitlichen Ausnehmungen 56 gezeigt: Bei der Ausgestaltung in Figur 6 ist eine seitliche Begrenzungswand 64 um eine parallel zu einer Längsachse (nicht dargestellt) der Nut 54 verlaufende Achse um einen Winkel von ungefähr 45° gekippt. Der angegebene Wert ist jedoch rein beispielhaft. Andere Werte sind ebenso möglich, sie hängen unter anderem vom zu sägenden Material ab, von der Frage, ob eine Absaugung vorhanden ist oder nicht, et cetera. Bei der Ausführungsform von Figur 6 erstreckt sich die gekippte seitliche Begrenzungswand 64 von der Nut 54 bis zur Unterseite der seitlichen Ausnehmung 56. Bei der Ausführungsform von Figur 7 dagegen weist die seitliche Ausnehmung 56 eine obere und im Wesentlichen horizontal verlaufende Begrenzungswand 66 auf, und erst von dieser aus erstreckt sich die gekippte seitliche Begrenzungswand 64, die bei der Ausführungsform in Figur 7 gegenüber der Vertikalen lediglich um ungefähr 30° gekippt ist. Auch hier sind selbstverständlich auch andere Winkelwerte denkbar. Eine solche gekippte Seitenwand lenkt den Spänestrahl besonders gut nach unten.

Bei der Ausführungsform von Figur 8 wiederum weist die seitliche Begrenzungswand 64 zum Sägespalt 50 hin eine Schräge beziehungsweise Fase 68 (also eine um eine vertikale Achse gekippte Fläche) auf, die gegenüber der Längsachse der Nut 54 einen Winkel von ungefähr 45° hat. Wiederum gilt, dass abhängig von der spezifischen Auslegung auch andere Winkelwerte möglich sind. Die Fase 68 könnte zusätzlich auch noch um eine horizontale Achse gekippt sein, um die Späne nach unten abzulenken.

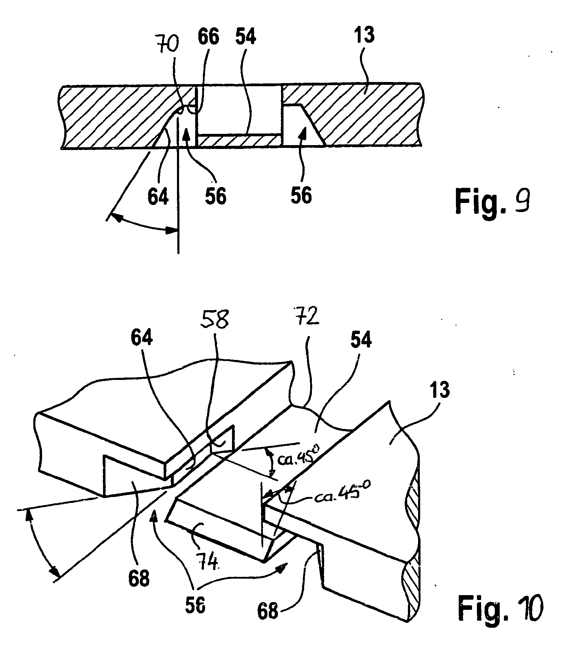

Die in Figur 9 gezeigte Ausführungsform unterscheidet sich von jener der Figur 7 dadurch, dass die seitliche Begrenzungswand 64 der seitlichen Ausnehmung 56 im Übergang zu der oberen Begrenzungswand 66 eine Rundung 70 mit einem Radius X aufweist.

Figur 10 wiederum zeigt eine Ausführungsform, welche im Vergleich zu jener der Figur 8 eine Basis 72 der Nut 54 aufweist, die an ihrem zum Sägespalt 50 weisenden Ende eine Fase 74, also eine Stirnfläche aufweist, die um eine parallel zum Sägespalt 50 verlaufende Achse gekippt ist. Außerdem ist auch die vom Sägespalt 50 abgewandte Stirnseite 58 der seitlichen Ausnehmung 56 schräg, nämlich um eine vertikale Achse gekippt.

## Patentansprüche

1. Plattenaufteilanlage (10), mit einem Auflagetisch (12) zum Auflegen mindestens eines Werkstücks (18), mit einer Säge (16), die längs einer Sägelinie bewegbar ist, mit einem Sägespalt (50), der längs der Sägelinie im Auflagetisch (12) vorhanden ist, mit einer Vorschubvbrrichtung (43) mit mindestens einer Spannzange (24), wobei in der Oberseite des Auflagetischs (12) mindestens eine Nut (54) zur Aufnahme eines unteren Klemmfingers (30) der Spannzange (24) vorhanden ist, **dadurch gekennzeichnet, dass** die Nut (54) an ihrem zum Sägespalt (50) weisenden Ende eine seitliche Ausnehmung (56) aufweist, welche nach oben wenigstens im Wesentlichen geschlossen und nach unten wenigstens bereichsweise offen ist.

2. Plattenaufteilanlage (10) nach Anspruch 1, **dadurch gekennzeichnet, dass** die Nut (54) auf beiden Seiten des Sägespalts (50) vorhanden ist und auf beiden Seiten des Sägespalts (50) jeweils die seitliche Ausnehmung (56) aufweist.

3. Plattenaufteilanlage (10) nach einem der vorhergehenden Ansprüche, **dadurch gekennzeichnet, dass** die Nut (54), bezogen auf ihre Längsachse, auf beiden Seiten jeweils die seitliche Ausnehmung (56) aufweist.

4. Plattenaufteilanlage (10) nach einem der vorhergehenden Ansprüche, **dadurch gekennzeichnet, dass** eine vom Sägespalt (50) abgewandte Stirnseite (58) der seitlichen Ausnehmung (56) abgerundet oder schräg ist.

5. Plattenaufteilanlage (10) nach einem der vorhergehenden Ansprüche, **dadurch gekennzeichnet, dass** die seitliche Ausnehmung (56) über ihre gesamte Länge und Breite nach unten offen ist.

6. Plattenaufteilanlage nach einem der vorhergehenden Ansprüche, **dadurch gekennzeichnet, dass** die seitliche Ausnehmung (56) durch einen Absaugspalt (51) wenigstens zeitweise mit einer an einem Sägewagen (52) der Säge (16) vorhandenen Absaugeinrichtung (53) verbunden ist.

7. Plattenaufteilanlage (10) nach einem der vorhergehenden Ansprüche, **dadurch gekennzeichnet, dass** eine seitliche Begrenzungswand (64) der seitlichen Ausnehmung (56) um eine parallel zu einer Längsachse der Nut (54) verlaufende Achse gekippt ist.

8. Plattenaufteilanlage (10) nach Anspruch 6, **dadurch gekennzeichnet, dass** sich die gekippte seitliche Begrenzungswand (64) von der Nut (54) bis zur Unterseite der seitlichen Ausnehmung (56) erstreckt.

9. Plattenaufteilanlage (10) nach einem der vorhergehenden Ansprüche, **dadurch gekennzeichnet, dass** eine seitliche Begrenzungswand der seitlichen Ausnehmung (56) zum Sägespalt (50) hin eine Schräge (68) aufweist.

10. Plattenaufteilanlage (10) nach einem der vorhergehenden Ansprüche, **dadurch gekennzeichnet, dass** eine seitliche Begrenzungswand (64) der seitlichen Ausnehmung (56) im Übergang zu einer oberen Begrenzungswand (66) eine Rundung (70) aufweist.

11. Plattenaufteilanlage (10) nach einem der vorhergehenden Ansprüche, **dadurch gekennzeichnet, dass** eine Basis (72) der Nut (54) an ihrem zum Sägespalt (50) weisenden Ende eine Fase (74) aufweist.

## Claims

1. A panel sizing assembly (10), having a supporting table (12) for laying at least one workpiece (18) thereon, having a saw (16) that is movable along a sawing line, having a saw gap (50) that is present along the sawing line in the supporting table (12), and having a feed device (43) with at least one collet chuck (24), there being at least one groove (54) in the top side of the supporting table (12) for receiving a lower clamping finger (30) of the collet chuck (24), **characterized in that** the groove (54), on its end toward the saw gap (50), has a lateral recess (56) that is at least substantially closed at the top and in at least some regions is open at the bottom.

2. The panel sizing assembly (10) according to claim 1, **characterized in that** the groove (54) is present on both sides of the saw gap (50) and has the lateral recess (56) on each of the two sides of the saw gap (50).

3. The panel sizing assembly (10) according to one of the foregoing claims, **characterized in that** the groove (54), with respect to its longitudinal axis, has the lateral recess (56) on each of the two sides.

4. The panel sizing assembly (10) according to one of the foregoing claims, **characterized in that** a face end (58), facing away from the saw gap (50), of the lateral recess (56) is rounded or slanted.

5. The panel sizing assembly (10) according to one of the foregoing claims, **characterized in that** the lateral recess (56) is open at the bottom over its entire length and width.

6. The panel sizing assembly (10) according to one of the foregoing claims, **characterized in that** at least from time to time the lateral recess (56) is connected by a suction gap (51) to a suction extractor (53) that is present on a carriage (52) of the saw (16).

7. The panel sizing assembly (10) according to one of the foregoing claims, **characterized in that** a lateral boundary wall (64) of the lateral recess (56) is tilted about an axis extending parallel to a longitudinal axis of the groove (54).

8. The panel sizing assembly (10) according claim 6, **characterized in that** the tilted lateral boundary wall (64) extends from the groove (54) to the underside of the lateral recess (56).

9. The panel sizing assembly (10) according to one of the foregoing claims, **characterized in that** a lateral boundary wall of the lateral recess (56) has a beveled edge (68) toward the saw gap (50).

10. The panel sizing assembly (10) according to one of the foregoing claims, **characterized in that** a lateral boundary wall (64) of the lateral recess (56) has a rounded area (70) at the transition to an upper boundary wall (66).

11. The panel sizing assembly (10) according to one of the foregoing claims, **characterized in that** a base (72) of the groove (54) has a chamfer (74) on its end toward the saw gap (50).

## Revendications

1. Dispositif de découpe de plaques (10), comprenant une table porte-pièce (12) sur laquelle peut être posée au moins une pièce (18), comprenant une scie (16) mobile le long d'une ligne de sciage, comprenant une fente de sciage (50) présente le long de la ligne de sciage dans la table porte-pièce (12), comprenant un dispositif d'avancée (43) doté d'au moins une pince de serrage (24), au moins une rainure (54) destinée à loger un doigt de serrage inférieur (30) de la pince de serrage (24) étant présente dans la face supérieure de la table porte-pièce (12), **caractérisé en ce que** la rainure (54) comprend sur son extrémité orientée vers la fente de sciage (50) un évidement latéral (56) au moins sensiblement fermé vers le haut et ouvert vers le bas au moins par endroits.

2. Dispositif de découpe de plaques (10) selon la revendication 1, **caractérisé en ce que** la rainure (54) est présente sur les deux faces de la fente de sciage (50) et comprend sur les deux faces de la fente de sciage (50) respectivement l'évidement latéral (56).

3. Dispositif de découpe de plaques (10) selon l'une quelconque des revendications précédentes, **caractérisé en ce que** la rainure (54), par rapport à son axe longitudinal, comprend sur les deux faces respectivement l'évidement latéral (56).

4. Dispositif de découpe de plaques (10) selon l'une quelconque des revendications précédentes, **caractérisé en ce qu'**une face frontale (58) de l'évidement latéral (56), opposée à la fente de sciage (50), est arrondie ou oblique.

5. Dispositif de découpe de plaques (10) selon l'une quelconque des revendications précédentes, **caractérisé en ce que** l'évidement latéral (56) est ouvert vers le bas sur toute sa longueur et sa largeur.

6. Dispositif de découpe de plaques (10) selon l'une quelconque des revendications précédentes, **caractérisé en ce que** l'évidement latéral (56) est relié au moins temporairement à un dispositif d'aspiration (53) présent sur un chariot de sciage (52) de la scie (16) par une fente d'aspiration (51).

7. Dispositif de découpe de plaques (10) selon l'une quelconque des revendications précédentes, **caractérisé en ce qu'**une paroi de délimitation latérale (64) de l'évidement latéral (56) est amenée à basculer autour d'un axe s'étendant parallèlement à un axe longitudinal de la rainure (54).

8. Dispositif de découpe de plaques (10) selon la revendication 6, **caractérisé en ce que** la paroi de délimitation latérale (64) basculée s'étend de la rainure (54) à la face inférieure de l'évidement latéral (56).

9. Dispositif de découpe de plaques (10) selon l'une quelconque des revendications précédentes, **caractérisé en ce qu'**une paroi de délimitation latérale de l'évidement latéral (56) présente un chanfrein (68) en direction de la fente de sciage (50).

10. Dispositif de découpe de plaques (10) selon l'une quelconque des revendications précédentes, **caractérisé en ce qu'**une paroi de délimitation latérale (64) de l'évidement latéral (56) présente une courbure (70) dans la transition vers une paroi de délimitation supérieure (66).

11. Dispositif de découpe de plaques (10) selon l'une quelconque des revendications précédentes, **caractérisé en ce qu'**une base (72) de la rainure (54) présente un chanfrein (74) sur son extrémité orientée vers la fente de sciage (50).
